# EUROPÄISCHE PATENTSCHRIFT

(11) **EP 1 727 995 B1**
(45) Veröffentlichungstag und Bekanntmachung des Hinweises auf die Patenterteilung: **10.09.2008**
(21) Anmeldenummer: 05729054.6
(22) Anmeldetag: 18.03.2005
(51) Int. Cl.: F16C 33/38

(54) **KÄFIG FÜR SCHRÄGKUGELLAGER**
CAGE FOR INCLINED BALL BEARINGS
LOGEMENT POUR ROULEMENT A BILLES A CONTACT OBLIQUE

(30) Priorität: 20.03.2004 DE 102004013803
(43) Veröffentlichungstag der Anmeldung: 06.12.2006
(73) Patentinhaber: Schaeffler KG, 91074 Herzogenaurach (DE)
(72) Erfinder: HÄPP, Alexander, 97461 Lenderhausen (DE)
(86) Internationale Anmeldenummer: PCT/DE2005/000503
(87) Internationale Veröffentlichungsnummer: WO 2005/090808

(56) Entgegenhaltungen:
- DE-A1- 3 706 013
- FR-A- 2 665 231
- US-A- 4 560 291
- US-A1- 2001 036 329

## Beschreibung

### Gebiet der Erfindung

Die Erfindung betrifft einen Käfig für Schrägkugellager mit umfangsseitig um eine Rotationsachse des Käfigs zueinander benachbarten Kugeltaschen, wobei die Kugeltaschen umfangsseitig durch Stege und in wenigstens eine axiale Richtung des Käfigs jeweils von einer Seitenwand mit annähernd gleichmäßiger Wanddicke begrenzt sind.

### Hintergrund der Erfindung

Ein derartiger Käfig ist in DE 3706013 A1 beschrieben. Der Käfig weist zwei durch Stege miteinander verbundene Seitenringe auf. Einer der Seitenringe ist auf der einen Seite des Käfigs oberhalb und ein anderer der Seitenringe unterhalb des Teilkreises angeordnet. Die Seitenringe des Käfigs sind ausgehend von den Stirnseiten mit Ringnuten versehen. Derartige Käfige werden aus Kunststoff hergestellt. Typische Beispiele zur Fertigung derartiger Käfige herangezogener Werkstoffe sind mit Glas oder mit Kohlefasern verstärkte Polyamide (z.B. PA66/GF).

Die Seitenringe sind auch unter Seitenborde bekannt. Die Ringnuten sind nach DE 3706013 A1 in den Seitenborden vorgesehen, um die Wanddicken der Borde möglichst dünnwandig auszubilden und um in allen Bereichen der Seitenborde gleichmäßige Wanddicken zu erzielen. Gleichmäßige Wanddicken und Wanddickenübergänge werden beim Spritzen von Kunststoffteilen angestrebt um Unterbrechungen des Materialflusses/Blasen vom Käfigwerkstoff in den Kavitäten der Spritzwerkzeuge am Übergang von dicken zu dünnen Querschnitten zu vermeiden. Außerdem werden durch gleichmäßige Wanddicken gleiche Abkühlgeschwindigkeiten in allen Bereichen des Werkstückes erzielt. Fehler aus ungewollten Schwächungen in dünnen Wandbereichen werden auch durch möglichst kurze Fließstrecken in Kavitäten mit relativ geringem Spritzquerschnitt vermieden.

Ein Käfig nach dem Oberbegriff des Anspruchs 1 ist aus US-A-2001/036329 bekannt.

Der Dünnwandigkeit sind durch die Anforderungen an eine hohe Betriebsfestigkeit des Käfigs Grenzen gesetzt. Im Übrigen sind dünnwandige Kunststoffteile nach dem Entformen aus dem Werkzeug äußerst instabil und verlieren häufig beim danach weiterfolgenden Abkühlen und während der Lagerung ihre bestimmungsgemäße Form bzw. Geometrie.

Besonders schwierig sind Käfige der betrachtenden Gattung zu gestalten, wenn diese zusätzlich Haltenasen aufweisen. Diese Haltenasen sind in der Regel an einem der Seitenborde ausgebildet und greifen in eine entsprechende Umfangsnut eines der Lagerringe des Schrägkugellagers ein. Über die Haltenasen sind die Käfige zusammen mit den Kugeln und dem entsprechenden Lagerring zu einer Baueinheit vormontiert, aus der die in die Kugeltaschen des Käfigs eingeschnappten Kugeln während der Montage in den anderen Lagerring des Schrägkugellagers nicht herausfallen können. Derartige Haltenasen sind auch für eine axiale Wegbegrenzung des Käfigs in einem Lager vorgesehen.

Bei der Montage des Käfigs auf den Lagerring federn die Haltenasen solange entweder elastisch ein oder elastisch auf, bis die Haltenasen in eine entsprechende Nut des Lagerringes einschnappen. Die Wandstärken im Bereich des Überganges der Haltenasen in den Käfig und des Käfigs müssen deshalb ausreichend stabil dimensioniert sein, um sich bei der Montage des Käfigs auf oder in den Lagerring nicht bleibend plastisch zu verformen. Andererseits müssen die Haltenasen elastisch genug ausgelegt sein, um die Montage des Käfigs in das Lager nicht zu erschweren und um Beschädigungen des Käfigs oder der Haltenasen während der Montage zu verhindern.

### Zusammenfassung der Erfindung

Die Aufgabe der Erfindung ist es daher, einen Käfig zu schaffen, der den vorgenannten und sich teils entgegenstehenden Forderungen an die Herstellbarkeit, an kostengünstige Herstellung und an die Funktion optimal gerecht wird.

Diese Aufgabe ist gemäß dem Gegenstand des Anspruches 1 gelöst. Die Kugeltaschen dieses Käfigs sind umfangsseitig durch zumindest quer zur Umfangsrichtung des Käfigs ausgerichtete Stege und in wenigstens einer axialen Richtung des Käfigs jeweils von einer Seitenwand mit annähernd gleichmäßiger Wanddicke begrenzt. Jede der Seitenwände verbindet zwei aneinander gegenüberliegende Stege umfangsseitig miteinander.

Die Seitenwände sind von den Stegen aus zumindest in die axiale Richtung ausgewölbt und stehen dabei in die axiale Richtung von den Stegen ab. Dabei sind die Außenkonturen der Seitenwände von umfangsseitig aufeinander folgenden Taschen mit zunehmendem Abstand in die axiale Richtung vom Steg aus zunehmend umfangsseitig voneinander frei entfernt, so dass der Käfig zumindest stirnseitig mit Lücken versehen ist, die sich teilweise zwischen den Taschen in Richtung der Stege erstrecken. Der axial am weitesten hervorstehende Umkehrpunkt der Wölbungen außen an jeder Seitenwand steht axial am weitesten aus dem Käfig in die axiale Richtung hervor.

Erfindungsgemäß geht jeweils eine Rippe in die axiale Richtung von jeweils einem der Stege aus und verbindet zwei der Seitenwände von umfangsseitig aufeinander folgenden Taschen miteinander. Jede der Rippen steht dabei in die axiale Richtung von dem Steg höchstens so weit ab, wie die Seitenwände von dem Steg aus in die axiale Richtung am weitesten hervorstehen, aber nicht weiter.

Zumindest einer der üblicherweise an Käfigen der gattungsbildenden Art beidseitig ausgebildeten und relativ dickwandigen Seitenborde entfällt an dem Käfig gemäß Erfindung. Stattdessen ist der Käfig an zumindest einer Stirnseite zwischen den ausgewölbten Seitenwänden der Taschen jeweils mit einer umfangsseitig oder tangential ausgerichteten Rippe zwischen den einzelnen aufeinander folgenden Taschen versehen. Für die Herstellung des Käfigs wird weniger Material eingesetzt und die funktionsbedingte Festigkeit ist über den Verbund von Rippen und Seitenwänden gewährleistet.

Umfangsseitig ausgerichtete Rippen zwischen den Seitenwänden sind vorzugsweise so gekrümmt, dass alle beliebigen Punkte einer der Rotationsachse zugewandten Rippenfläche radial gleich weit von der Rotationsachse des Käfigs entfernt sind. Durch die axial auswärts gewölbten Seitenwände verbreitert sich die Rippenfläche in Umfangsrichtung mit zunehmendem axialen Abstand von dem jeweiligen Steg. Dabei ist jede der Lücken vorzugsweise radial zur Rotationsachse hin von einer der Rippen begrenzt. Die Rippen gehen so axial in den Steg über, dass der größte radiale Abstand der Ri,ppen an der der Rotationsachse zugewandten Seite der Rippe, von der Rotationsachse höchstens genauso groß ist, wie der kleinste radiale Abstand eines jeden der Stege von der Rotationsachse.

Der Käfig weist wahlweise einen Seitenbord auf, der die Taschen entgegengesetzt zu der Stirnseite begrenzt, an der die Rippen ausgebildet sind.

Da üblicherweise bei Käfigen für Schrägkugellager der gattungsbildenden Art einer der Seitenborde radial unterhalb und einer der Seitenborde radial oberhalb des Teilkreises der Kugeln verläuft, ergibt sich für einen Käfig gemäß Erfindung, dass der kleinste radiale Abstand des Seitenbordes zur Rotationsachse des Käfigs größer ist, als der größte radiale Abstand der Seitenwände zur Rotationsachse.

Eine weitere Ausgestaltung der Erfindung sieht einen Käfig für Schrägkugellager mit federnd nachgiebigen Haltenasen vor. Die Haltenasen sind für das axiale Sichern des Käfigs in einer Haltenut des Innenringes bzw. des Außenringes vorgesehen. Jede der Haltenasen geht aus einer der ausgewölbten Seitenwände hervor und ist umfangsseitig zu weiteren der Haltenasen benachbart. Vorzugsweise gehen die Haltenasen zunächst radial von den Seitenwänden ab, und weisen dann schräg in Richtung der Rotationsachse.

Die Anbindung der Haltenasen an die Seitenwände ist elastisch gestaltet. Dazu ist jeweils an dem Übergang von der Seitenwand zur Haltenase eine Nut in dem Material des Käfigs ausgebildet. Die Nut ist umfangsseitig oder tangential zur Rotationsachse ausgerichtet. Die Wanddicke der Seitenwand ist durch die in axiale Richtung offene Nut reduziert. Dabei ist der Querschnitt der Nut in einem Längsschnitt des Käfigs entlang der Rotationsachse durch einen Radius beschrieben. Mit der Nut ist eine elastische Sollbiegestelle zwischen dem Käfig und der Haltenase geschaffen, die die Montage erleichtert und die den Käfig vor Beschädigungen schützt.

Weitere Ausgestaltungen der Erfindung sind im Abschnitt detaillierte Beschreibung der Zeichnungen beschrieben.

### Kurze Beschreibung der Zeichnungen

Erfindung wird nachfolgend anhand eines Ausführungsbeispieles näher erläutert. Es zeigen im einzelnen:
- Figur 1: die Gesamtansicht eines Ausführungsbeispieles eines erfindungsgemäßen Käfigs,
- Figur 2: die Frontalansicht des Käfigs aus Figur 1 mit Pfeilrichtung,
- Figur 3: eine Seitenansicht des Käfigs,
- Figur 4: einen Längsschnitt durch den Käfig entlang der Linie IV-IV nach Figur 2,
- Figur 5: eine Teilansicht eines Schrägkugellagers mit dem Käfig nach Figur 1, im Längsschnitt dargestellt und
- Figur 6: das Detail Z aus Figur 2 stark vergrößert.

### Detaillierte Beschreibung der Zeichnungen

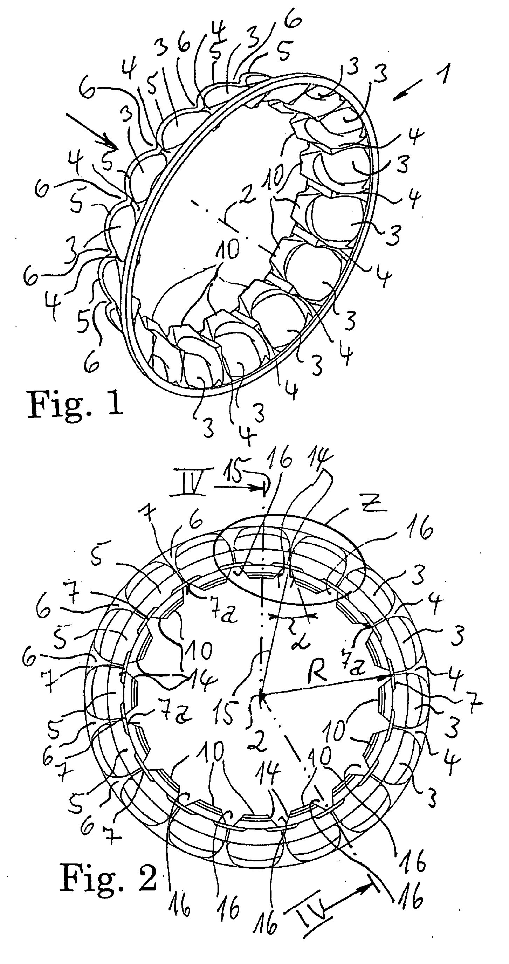

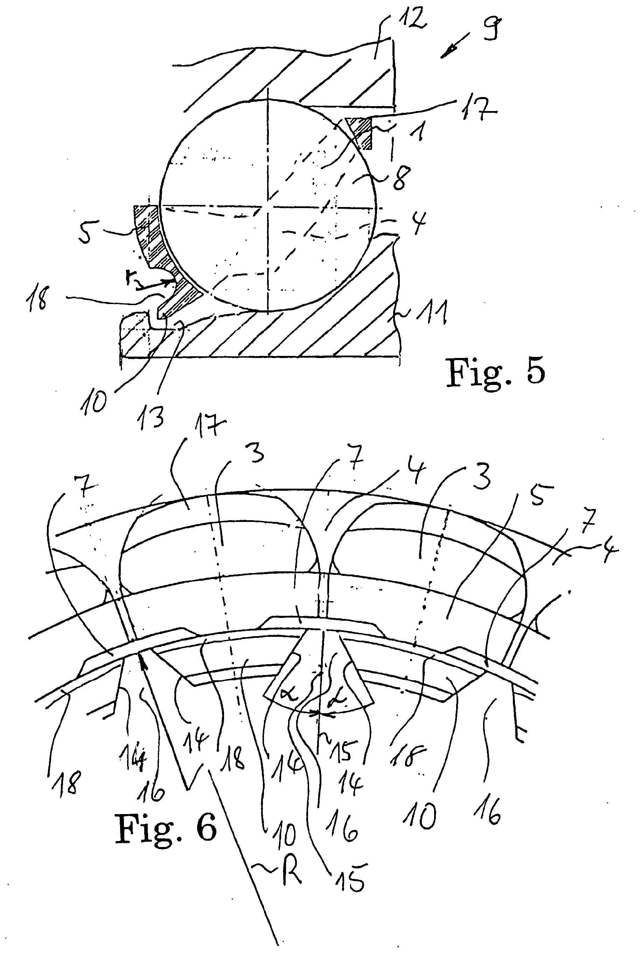

Figuren 1 bis 3 zeigen ein Ausführungsbeispiel eines erfindungsgemäßen Käfigs 1. Der Käfig weist umfangsseitig um seine Rotationsachse 2 zueinander mit gleichmäßiger Teilung benachbarte Kugeltaschen 3 auf. In jeder einzelnen der Kugeltaschen 3 ist eine Kugel 8 geführt. In Figur 5, einer geschnittenen Teilansicht eines Schrägkugellagers 9, ist der radial zwischen einem Innenring 11 und einem Außenring 12 angeordnete Käfig 1 mit Kugeln 8 dargestellt. Die Kugeltaschen 3 sind durch quer zur Umfangsrichtung verlaufende Stege 4 und an einer Stirnseite ist der Käfig 1 von Seitenwänden 5 mit annähernd gleichmäßiger Wanddicke begrenzt.

Die Seitenwände 5 sind von den Stegen 4 aus in die axiale Richtung ausgewölbt, so dass stirnseitig des Käfigs 1 axiale Lücken 6 ausgebildet sind. Die Lücken 6 sind radiale Richtung der Rotationsachse 2 von jeweils einer Rippe 7 begrenzt. Die Rippen 7 sind in Umfangsrichtung ausgerichtet und verlaufen in die Umfangsrichtungen gekrümmt (Figur 2 und 6). Dabei sind die Krümmungen der Rippen 7 durch einen gemeinsamen Radius R beschrieben, der von der Rotationsachse 2 ausgeht. Alle beliebigen Punkte der zur Rotationsachse 2 gewandten Rippenfläche 7a sind um den Radius R zur Rotationsachse 2 beabstandet. Die Rippen 7 verbreitern sich von den Stegen 4 aus in die axiale Richtung.

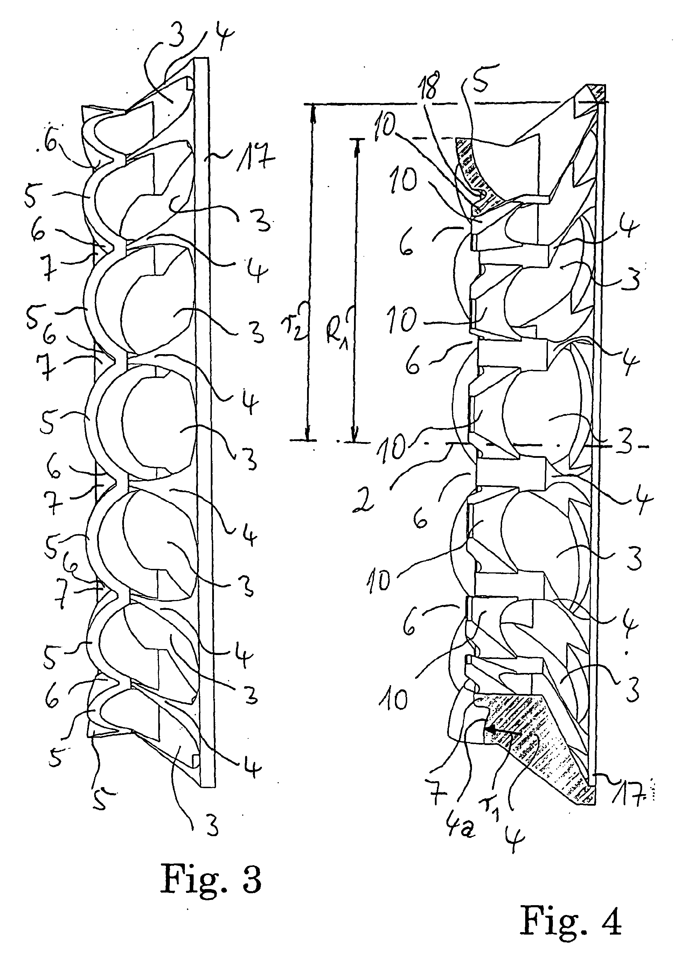

Wie aus Figur 3 ersichtlich ist, steht jede der Rippen 7 in die axiale Richtung von dem jeweiligen Steg 4 nicht so weit ab, wie die Seitenwände 5 in die axiale Richtung von dem Steg 4 aus axial maximal aus dem Käfig 1 hervorstehen.

Käfig 1 weist federnd nachgiebige Haltenasen 10 auf. Die Haltenasen 10 greifen radial in eine Ringnut 13 des Innenringes 11 ein. Mittels der Haltenasen 10 ist der Käfig 1 axial mit Spiel an dem Innenring 11 gesichert. In Umfangsrichtung gewandten Flanken 14 an den Haltenasen 10 verlaufen zueinander geneigt (Figur 2, Figur 6). Dabei sind die Flanken 14 in diesem Fall so zueinander geneigt, dass der Abstand der jeweils durch eine Umfangslücke 16 zueinander beanstandeten Haltenasen 10 in Richtung der Rotationsachse 2 zunimmt. Die Flanken 14, vorzugsweise ebene Flächen oder gerade Kanten, sind um einen Winkel α zu einer gedachten, von der Rotationsachse 2 ausgehenden und mit der Rotationsachse 2 gleichgerichteten Ebene 15 geneigt α weist vorzugsweise eine Größe von 30° auf.

Die Dicke der Seitenwände ist durch eine Nut 18 zwischen jeder der Seitenwände 5 und einer der Haltenasen 10 reduziert. Die Nut 18 ist in dem Längsschnitt nach Figur 5 durch einen Radius r beschrieben. Jede der Nuten 18 ist radial nach außen anteilig von einer der Seitenwände 5 und von zwei in Umfangsrichtung durch eine der Seitenwände 5 voneinander getrennte der Rippen 7 begrenzt (Figur 6). Dabei sind in Umfangsrichtung zueinander benachbarte der Nuten 18 paarweise radial nach außen gemeinsam von mindestens einer der Rippen 7 begrenzt. Die Haltenasen 10 und die Rippen 7 stehen in die axiale Richtung nicht soweit hervor, wie die Seitenwände 5 von den Stegen 4 aus in die axiale Richtung ausgewölbt sind.

Die Kugeltaschen 3 sind in die entgegen gesetzte Richtung zu den Seitenwänden 5 mittels eines Seitenbordes 17 begrenzt. Der Querschnitt des Seitenbordes 17 in axiale Richtungen ist annähernd der Dicke der Seitenwände 5 angepasst (Figur 5). Wie aus Figur 4 ersichtlich ist, erstrecken sich die Stege 4 von dem Seitenbord 17 aus zunächst geneigt in Richtung der Rotationsachse 2 und verlaufen dann in axiale Richtung. Die Stirnseite 4a der Stege 4 in den Lücken 6 und dabei über den Rippen 7 ist durch einen Radius r, beschrieben. Der kleinste durch den Radius r₂ beschriebene radiale Abstand des Seitenbordes 17 zur Rotationsachse ist größer als der größte durch den Radius R, beschriebene radiale Abstand der Seitenwände 5 zur Rotationsachse.

### Bezugszeichen

- 1: Käfig
- 2: Rotationsachse
- 3: Kugeltasche
- 4: Steg
- 4a: Stirnseite
- 5: Seitenwand
- 6: Lücke
- 7: Rippe
- 7a: Rippenfläche
- 8: Kugel
- 9: Schrägkugellager
- 10: Haltenase
- 11: Innenring
- 12: Außenring
- 13: Ringnut
- 14: Flanken
- 15: Ebene
- 16: Umfangslücke
- 17: Seitenbord
- 18: Nut

## Patentansprüche

1. Käfig (1) für Schrägkugellager (9) mit umfangsseitig um eine Rotationsachse (2) des Käfigs (1) zueinander benachbarten Kugeltaschen (3), der Käfig (1) mit den Merkmalen
- die Kugeltaschen (3) sind umfangsseitig durch Stege (4) begrenzt,
- die Kugeltaschen (3) sind in wenigstens eine axiale Richtung des Käfigs (1) jeweils von einer Seitenwand (5) mit annähernd gleichmäßiger Wanddicke begrenzt,
- die Seitenwände (5) sind von den Stegen (4) aus zumindest in die axiale Richtung ausgewölbt,
**dadurch gekennzeichnet, daß**
- jeweils eine Rippe (7) in die axiale Richtung von einem der Stege (4) ausgeht sowie zwei der Seitenwände (5) umfangsseitig miteinander verbindet und
- jede der Rippen (7) dabei in die axiale Richtung von dem Steg (4) höchstens soweit absteht, wie die Seitenwände (5) von dem Steg(4) aus in die axiale Richtung gewölbt sind.

2. Käfig nach Anspruch 1, bei dem die Rippen (7) zwischen den Seitenwänden (5) in die Umfangsrichtung ausgerichtet sind und in die Umfangsrichtung gekrümmt verlaufen.

3. Käfig nach Anspruch 2, mit Lücken (6) zwischen den ausgewölbten Seitenwänden (5) , wobei jede der Lücken (6) radial zur Rotationsachse (2) hin von einer der Rippen (7) begrenzt ist.

4. Käfig nach Anspruch 3, mit einer zur Rotationsachse (2) gewandten Rippenfläche (7a) an jeder der Rippen (7), wobei alle beliebigen Punkte der Rippenfläche (7a) radial gleich weit von Rotationsachse (2) des Käfigs (1) entfernt sind, und wobei sich die Rippenfläche (7a) mit zunehmendem axialem Abstand von einem der Stege (4) aus in Umfangsrichtung verbreitert.

5. Käfig nach Anspruch 1, 2, 3 oder 4, bei dem der größte radiale Abstand der Rippen (7) von der Rotationsachse (2) höchstens genauso groß ist, wie der kleinste radiale Abstand eines jeden der Stege (4) von der Rotationsachse (2).

6. Käfig nach Anspruch 1, mit einem umfangsseitig umlaufenden Seitenbord (17), wobei der Seitenbord (17) die Kugeltaschen (3) entgegengesetzt zu der axialen Richtung begrenzt.

7. Käfig nach Anspruch 6, bei dem der kleinste radiale Abstand des Seitenbordes (17) zur Rotationsachse (2) des Käfigs (1) größer ist, als der größte radiale Abstand der Seitenwände (5) zur Rotationsachse (2).

8. Käfig nach Anspruch 1, mit federnd nachgiebigen Haltenasen (10) für das axiale Sichern des Käfigs (1) in einer Ringnut (13) eines Innenringes (11), wobei jede der Haltenasen (10) jeweils aus einer der Seitenwände (5) hervorgeht und dabei umfangsseitig zu einer weiteren der Haltenasen (10) benachbart ist.

9. Käfig nach Anspruch 8, mit Nuten (18), wobei die Wanddicke der Seitenwände (5) mittels jeweils einer Nut (18) reduziert ist und dabei jede der Nuten (18) in Richtung der Rotationsachse (2) von einer der Haltenasen (10) und seitens der Kugeltasche (3) von einer der Seitenwände (5) begrenzt ist.

10. Käfig nach Anspruch 9, bei dem die Nut (18), in einem entlang der Rotationsachse (2) verlaufenden Längsschnitt durch den Käfig (1) betrachtet, mittels eines Radius beschrieben ist.

11. Käfig nach Anspruch 9, bei dem jede der Nuten (18) radial nach außen anteilig von einer der Seitenwände (5) sowie von zwei in Umfangsrichtung mittels einer der Seitenwände (5) voneinander getrennten der Rippen (7) begrenzt ist.

12. Käfig nach Anspruch 9, bei dem die Nuten (18) paarweise radial nach außen gemeinsam von mindestens einer der Rippen (7) teilweise begrenzt sind.

13. Käfig nach Anspruch 8 oder 9, bei dem die Halternasen (10) höchstens soweit in die axiale Richtung hervorstehen, wie die Seitenwände (5) von dem Steg (4) aus in die axiale Richtung am weitesten hervorstehen.

14. Käfig nach Anspruch 8, 12 oder 13, mit Umfangslücken (16) umfangsseitig zwischen den Haltenasen (10), wobei jede der Umfangslücken (16) radial nach außen teilweise von einem der Stege (4) und von einer der Rippen (7) begrenzt ist.

15. Käfig nach Anspruch 8, bei dem in die Umfangsrichtungen gewandte Flanken (14) der Haltenasen (10) zueinander geneigt verlaufen.

16. Käfig nach Anspruch 15, bei dem der Abstand zwischen einander über eine Umfangslücke (16) zugewandter der Flanken (14) von zueinander benachbarten der Haltenasen (17) in Richtung der Rotationsachse (2) zunimmt.

17. Käfig nach Anspruch 15 oder 16, bei dem die Flanken (14) um einem Winkel zu einer gedachten von der Rotationsachse (2) ausgehenden sowie mit der Rotationsachse (2) gleichgerichteten Ebene (15) geneigt sind.

## Claims

1. Cage (1) for inclined ball bearings (9) having ball pockets (3) which are adjacent to one another on the circumferential side about a rotational axis (2) of the cage (1), the cage (1) having the following features:
- the ball pockets (3) are delimited on the circumferential side by webs (4),
- the ball pockets (3) are delimited, in at least one axial direction of the cage (1), in each case by a side wall (5) having an approximately uniform wall thickness,
- the side walls (5) are arched, starting from the webs (4), at least in the axial direction,
**characterized in that**
- in each case one rib (7) emanates in the axial direction from one of the webs (4) and connects two of the side walls (5) to one another on the circumferential side, and
- each of the ribs (7) protrudes here in the axial direction from the web (4) at most to the same extent as the side walls (5) are arched, starting from the web (4), in the axial direction.

2. Cage according to Claim 1, in which the ribs (7) between the side walls (5) are oriented in the circumferential direction and extend in a curved manner in the circumferential direction.

3. Cage according to Claim 2, having gaps (6) between the arched side walls (5), each of the gaps (6) being delimited radially toward the rotational axis (2) by one of the ribs (7).

4. Cage according to Claim 3, having a rib face (7a) which faces the rotational axis (2) on each of the ribs (7), all desired points of the rib face (7a) being spaced apart radially to the same extent from the rotational axis (2) of the cage (1), and the rib face (7a) widening in the circumferential direction with an increasing axial spacing from one of the webs (4).

5. Cage according to Claim 1, 2, 3 or 4, in which the greatest radial spacing of the ribs (7) from the rotational axis (2) is at most equally as great as the smallest radial spacing of each of the webs (4) from the rotational axis (2).

6. Cage according to Claim 1, having a side rim (17) which runs on the circumferential side, the side rim (17) delimiting the ball pockets (3) in the opposite direction to the axial direction.

7. Cage according to Claim 6, in which the smallest radial spacing of the side rim (17) from the rotational axis (2) of the cage (1) is greater than the greatest radial spacing of the side walls (5) from the rotational axis (2).

8. Cage according to Claim 1, having retaining lugs (10) which are resilient in a sprung manner for axially securing the cage (1) in an annular groove (13) of an inner ring (11), each of the retaining lugs (10) protruding from one of the side walls (5) and being adjacent here on the circumferential side to a further retaining lug (10).

9. Cage according to Claim 8, having grooves (18), the wall thickness of the side walls (5) being reduced by in each case one of the grooves (18) and each of the grooves (18) being delimited here in the direction of the rotational axis (2) by one of the retaining lugs (10) and, on the side of the ball pockets (3), by one of the side walls (5).

10. Cage according to Claim 9, in which the groove (18), as viewed in a longitudinal section along the rotational axis (2) of the cage (1), is described by a radius.

11. Cage according to Claim 9, in which each of the grooves (18) is delimited radially to the outside proportionally by one of the side walls (5) and by two of the ribs (7) which are separated from one another in the circumferential direction by means of one of the side walls (5).

12. Cage according to Claim 9, in which the grooves (18) are delimited partially in pairs, radially to the outside, jointly by at least one of the ribs (7).

13. Cage according to Claim 8 or 9, in which the retaining lugs (10) protrude in the axial direction at most to the extent that the side walls (5) protrude at most in the axial direction starting from the web (4).

14. Cage according to Claim 8, 12 or 13, having circumferential gaps (16) on the circumferential side between the retaining lugs (10), each of the circumferential gaps (16) being delimited radially to the outside partially by one of the webs (4) and by one of the ribs (7).

15. Cage according to Claim 8, in which flanks (14), which face in the circumferential directions, of the retaining lugs (10) extend in an inclined manner with respect to one another.

16. Cage according to Claim 15, in which the spacing between flanks (14), which face one another over a circumferential gap (16), of mutually adjacent retaining lugs (10) increases in the direction of the rotational axis (2).

17. Cage according to Claim 15 or 16, in which the flanks (14) are inclined by an angle with respect to an imaginary plane (15) which emanates from the rotational axis (2) and is aligned with the rotational axis (2).

## Revendications

1. Cage (1) pour palier à billes oblique (9), laquelle cage présente à sa périphérie des poches à bille (3) voisines les unes des autres et disposées autour de l'axe de rotation (2) de la cage (1), la cage (1) présentant les caractéristiques suivantes:
- les poches à bille (3) sont limitées dans la direction périphérique par des traverses (4),
- chaque poche à bille (3) est délimitée dans au moins une direction axiale de la cage (1) par une paroi latérale (5), toutes les parois latérales ayant sensiblement la même épaisseur,
- les parois latérales (5) sont bombées par rapport aux traverses (4) au moins dans la direction axiale,
**caractérisée en ce que**
- une nervure (7) déborde dans la direction axiale de chacune des traverses (4) et relie l'une à l'autre dans la direction périphérique deux des parois latérales (5) et
- dans la direction axiale, chacune des nervures (7) déborde de la traverse (4) au plus de la distance sur laquelle les parois latérales (5) sont bombées dans la direction axiale par rapport à la traverse (4).

2. Cage selon la revendication 1, dans laquelle les nervures (7) situées entre les parois latérales (5) sont orientées dans la direction périphérique et sont incurvées dans la direction périphérique.

3. Cage selon la revendication 2, qui présente des interstices (6) entre les parois latérales (5) bombées, chacun des interstices (6) étant délimité par l'une des nervures (7) dans la direction qui s'étend radialement par rapport à l'axe de rotation (2).

4. Cage selon la revendication 3, qui présente sur chacune des nervures (7) une surface nervurée (7a) tournée vers l'axe de rotation (2), tout point quelconque de la surface nervurée (7a) étant éloigné radialement de la même distance par rapport à l'axe de rotation (2) de la cage (1) et les surfaces nervurées (7a) s'élargissant dans la direction périphérique lorsque leur distance axiale par rapport à l'une des traverses (4) augmente.

5. Cage selon les revendications 1, 2, 3 ou 4 dans laquelle la plus grande distance radiale entre les nervures (7) et l'axe de rotation (2) est au plus aussi grande que la plus petite distance radiale de chacune des traverses (4) par rapport à l'axe de rotation (2).

6. Cage selon la revendication 1, qui présente à sa périphérie un bord latéral périphérique (17), le bord latéral (17) délimitant les poches à bille (3) dans la direction opposée à la direction axiale.

7. Cage selon la revendication 6, dans laquelle la plus petite distance radiale entre le bord latéral (17) et l'axe de rotation (2) de la cage (1) est plus grande que la plus grande distance radiale entre les parois latérales (5) et l'axe de rotation (2).

8. Cage selon la revendication 1, qui présente des becs de maintien (10) élastiquement déformables qui maintiennent axialement la cage (1) dans une rainure annulaire (13) d'un anneau intérieur (11), chacun des becs de maintien (10) débordant de l'une des parois latérales (5) et étant voisin d'un autre bec de maintien (10) dans la direction périphérique.

9. Cage selon la revendication 8, qui présente des rainures (18), l'épaisseur de chaque paroi latérale (5) étant réduite par une rainure (18) et chacune des rainures (18) étant délimitée dans la direction de l'axe de rotation (2) par l'un des becs de maintien (10) et sur le côté des poches à bille (3) par l'une des parois latérales (5).

10. Cage selon la revendication 9, dans laquelle dans une coupe longitudinale qui s'étend le long de l'axe de rotation (2) et vue à travers la cage (1), la rainure (18) est définie par un rayon.

11. Cage selon la revendication 9, dans laquelle chacune des rainures (18) est délimitée radialement vers l'extérieur en partie par l'une des parois latérales (5) ainsi que dans la direction périphérique par deux des rainures (7) séparées l'une de l'autre par l'une des parois latérales (5).

12. Cage selon la revendication 9, dans laquelle, dans la direction qui s'étend radialement vers l'extérieur, les rainures (18) sont délimitées partiellement ensemble par au moins l'une des nervures (7).

13. Cage selon les revendications 8 ou 9, dans laquelle les becs de maintien (10) débordent dans la direction axiale au plus de la distance de laquelle les parois latérales (5) débordent au plus de la traverse (4) dans la direction axiale.

14. Cage selon les revendications 8, 12 ou 13, qui présente à la périphérie des interstices périphériques (16) entre les becs de maintien (10), chacun des interstices périphériques (16) étant délimité radialement vers l'extérieur en partie par l'une des traverses (4) et par l'une des nervures (7).

15. Cage selon la revendication 8, dans laquelle les flancs (14), orientés dans la direction périphérique, des becs de maintien (10) sont inclinés l'un par rapport à l'autre.

16. Cage selon la revendication 15, dans laquelle la distance entre les flancs (14) tournés l'un vers l'autre par l'intermédiaire d'un interstice périphérique (16) et les becs de maintien (17) voisins les uns des autres augmente dans la direction de l'axe de rotation (2).

17. Cage selon les revendications 15 ou 16, dans laquelle les flancs (14) sont inclinés obliquement par rapport à un plan (15) imaginaire qui inclut l'axe de rotation (2) et sont alignés sur la direction de l'axe de rotation (2).
